# EUROPEAN PATENT SPECIFICATION

(11) **EP 2 369 963 B1**
(45) Date of publication and mention of the grant of the patent: **05.12.2012**
(21) Application number: 09756563.4
(22) Date of filing: 14.10.2009
(51) Int. Cl.: A47J 31/46

(54) **INFUSION UNIT**
AUFGUSSEINHEIT
UNITÉ D'INFUSION

(30) Priority: 14.10.2008 IT TO20080755
(43) Date of publication of application: 05.10.2011
(73) Proprietor: SGL ITALIA S.R.L. CON UNICO SOCIO, 10156 Torino (IT)
(72) Inventor: GAMBAUDO, Gian Mauro, 14049 Nizza Monferrato (IT)
(74) Representative: Jorio, Paolo
(86) International application number: PCT/IB2009/007128
(87) International publication number: WO 2010/043952

(56) References cited:
- EP-A- 0 690 234
- EP-A- 1 798 457
- WO-A-2006/033049
- FR-A- 2 316 901

## Description

### TECHNICAL FIELD

The present invention relates to a beverage-making infusion unit.

More specifically, the present invention relates to an infusion unit comprising a number of component parts, in turn comprising a boiler and a pump; a hydraulic circuit connecting the component parts and comprising a multifunction valve assembly, in turn comprising a manifold having an inlet fitting for pressurized water from the pump, an outlet fitting connected to the boiler, a first one-way valve, and a second overpressure valve.

Though the infusion unit of the present invention can be used for making numerous different beverages, the following description refers, purely by way of example, to an infusion unit for making coffee from ground coffee contained or not in a capsule.

### BACKGROUND ART

An infusion unit of the type described above is known from EP 0 690 234, wherein, to prevent the superheated water in the boiler from creating sufficient overpressure inside the boiler to overcome the resistance of the outlet valve and so leak from and empty the boiler when the infusion unit is not in use, a multifunction valve assembly is employed comprising a two-way valve fitted inside the manifold and comprising both said first valve, and a calibrated valve which, over and above a given pressure, allows the water in the manifold to bypass the first valve and drain off. The manifold is also connected to the second valve, which is only activated to drain the manifold when the pressure in the manifold reaches danger level.

Given the calibrated valve, the manifold, and therefore the boiler, never falls below a given pressure, which is determined by the calibrated valve and always lower than the boiler outlet valve opening pressure, so the boiler never empties either into the manifold and drain, or by leaking through the outlet valve.

Leakage through the boiler outlet valve, which the above known assembly tends to prevent, is not, however, altogether a disadvantage, in that it prevents inevitable impurities (such as ground coffee) in the outlet valve from reaching the manifold, as in the case of the above known infusion unit, and so forming sediment and mould.

### DISCLOSURE OF INVENTION

It is an object of the present invention to provide an infusion assembly of the type described above, comprising a highly simplified multifunction valve assembly designed to prevent backflow of water from the boiler to the manifold.

According to the present invention, there is provided an infusion assembly as claimed in Claim 1 and preferably in any one of the following Claims depending directly or indirectly on Claim 1.

### BRIEF DESCRIPTION OF THE DRAWINGS

A number of non-limiting embodiments of the present invention will be described by way of example with reference to the accompanying drawings, in which:
Figure 1 shows a schematic of a first preferred embodiment of the infusion assembly according to the present invention;
Figure 2 shows an axial section of a detail in Figure 1;
Figure 3 shows a schematic of a second preferred embodiment of the infusion assembly according to the present invention;
Figures 4 and 5 show axial sections of respective details in Figure 3;
Figure 6 shows a schematic of a third preferred embodiment of the infusion assembly according to the present invention;
Figures 7 and 8 show axial sections of respective details in Figure 6.

### BEST MODE FOR CARRYING OUT THE INVENTION

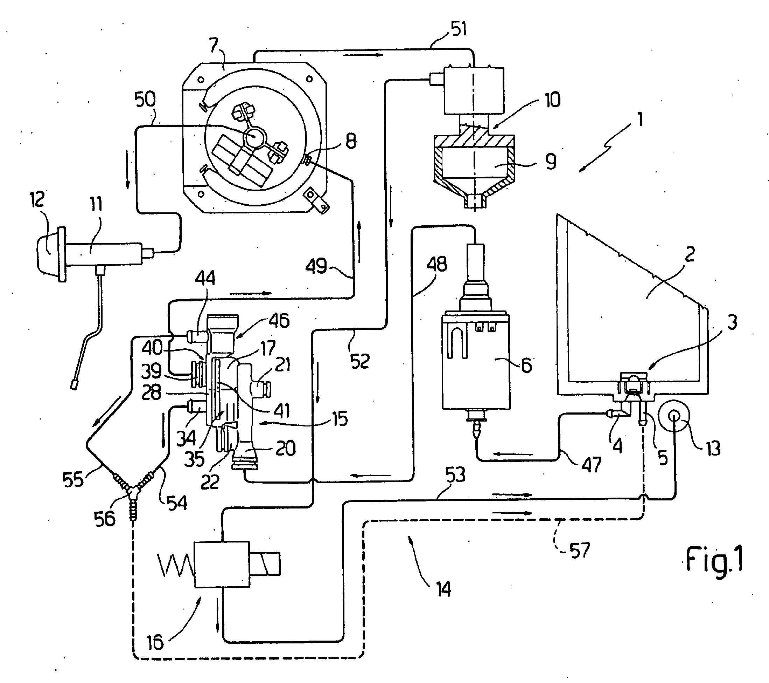

Number 1 in Figure 1 indicates as a whole an infusion assembly for an espresso coffee machine.

Infusion assembly 1 comprises a number of component parts, such as an infusion water reservoir 2 fitted at the bottom with a valve 3 communicating with the inside of reservoir 2 and having an outlet 4 and an inlet 5; a preferably electromagnetic pump 6; i a known boiler 7 having a water inlet 8, a first outlet (not shown) connected in known manner to an infusion chamber 9 via a piston of a hydraulic cylinder 10 closing infusion chamber 9, and a second outlet connected to a steam dispenser controlled by a tap 12; a waste container 13; and a hydraulic circuit 14 connecting the above component parts.

Hydraulic circuit 14 comprises a multifunction valve assembly 15 made of molded plastic; and a discharge valve 16.

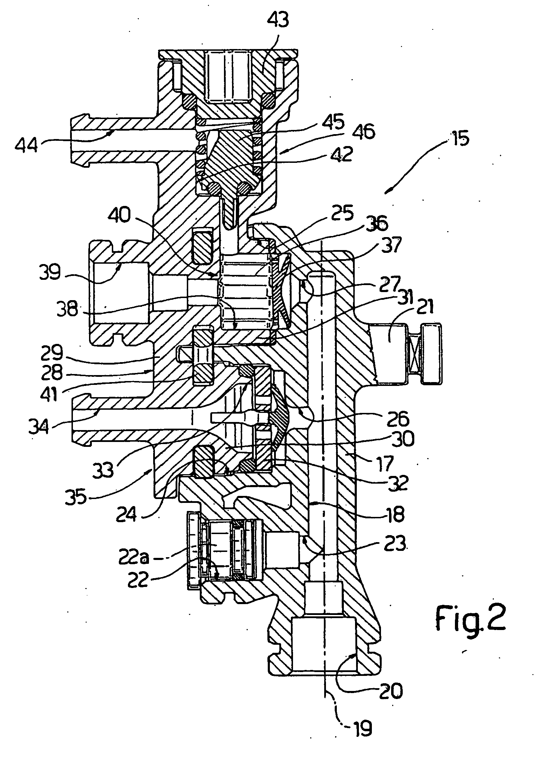

As shown more clearly in Figure 2, valve assembly 15 comprises an elongated base 17 housing a manifold 18, which extends along a longitudinal axis 19, has a fitting 20 at one end, and is closed at the other end. On one side of manifold 18, base 17 has a connector for connection to a known fixed frame (not shown), and, on the other side, has three radial cavities, a first of which, adjacent to fitting 20, defines a further fitting 22 communicating with manifold 18 via a radial hole 23 and closed in fluidtight manner by a cap 22a, and the other two of which, indicated 24 and 25, communicate with manifold 18 via respective radial holes 26 and 27 located successively along manifold 18, on the opposite side of radial hole 23 to fitting 20.

Valve assembly 15 also comprises a cover 28, in turn comprising a plate 29 parallel to longitudinal axis 19 and having, on one side, two tubular appendixes 30, 31. Tubular appendix 30 is inserted in fluidtight manner, with the interposition of an O-ring and the outer periphery of a perforated plate 32, inside radial cavity 24 to define a chamber 33, which is divided transversely by plate 32 into two parts, one communicating with manifold 18 via radial hole 26, and the other communicating with the outside along a conduit extending through plate 29 and a fitting 34. Fluid flow through the holes in plate 32 and outwards from manifold 18 is regulated by a known flexible hood which, together with plate 32 and chamber 33, defines a known one-way relief or self-prime valve 35 which allows fluid flow outwards from manifold 18 when the pressure in manifold 18 remains below a given value.

Tubular appendix 31 has inner axial appendixes 36, and is inserted in fluidtight manner, with the interposition of the outer periphery of a perforated membrane 37, inside radial cavity 25 to define a chamber 38 divided transversely by membrane 37 into two parts, one communicating with manifold 18 via radial hole 27, and the other communicating with the outside along a conduit extending through plate 29 and a fitting 39. At rest, membrane 37 rests on the ends of appendixes 36, and fluid flow through the holes in membrane 37 is regulated by a flexible hood which, together with membrane 37 and chamber 38, defines a known one-way valve 40 only allowing fluid flow outwards from manifold 18, and preventing any backflow of fluid from fitting 39 to manifold 18.

Cover 28 is fitted integrally to base 17 by a click-in fastener 41 shaped like a double circlip, and has an end portion that projects from the end of base 17 opposite the end with fitting 20, and has an inner chamber 42 parallel to longitudinal axis 19 and communicating, at one end, with the part of chamber 38 communicating with fitting 39, i.e. with the part of chamber 38 downstream from membrane 37 in the water flow direction to boiler 7. Chamber 42 is closed at the other end by a cap 43, and communicates laterally with the outside along a conduit extending through plate 29 and a fitting 44 parallel to fittings 34 and 39. Chamber 42 is fitted inside with a movable member or pin 45, which slides in opposition to a spring and defines, with chamber 42, a one-way overpressure or discharge valve 46, which normally cuts off connection between chambers 38 and 42, and only connects fitting 39 to fitting 44 when the pressure inside fitting 39 exceeds a given value and completely outside manifold 18.

As shown in Figure 1, hydraulic circuit 14 comprises a conduit 47 connecting outlet 4 of reservoir 2 to an inlet of pump 6; a conduit 48 connecting an outlet of pump 6 to inlet fitting 20 of manifold 18 of valve assembly 15; a conduit 49 connecting fitting 39 of valve assembly 15 to inlet 8 of boiler 7; a conduit 50 controlled by tap 12 and connecting an outlet of boiler 7 to steam dispenser 11; a conduit 51 connecting a further outlet of boiler 7 to an inlet of hydraulic cylinder 10, and extending, in known manner not shown, through a calibrated valve (not shown) and through the piston of hydraulic cylinder 10 to infusion chamber 9; a conduit 52 connecting an outlet of hydraulic cylinder 10 to an inlet of discharge valve 16; a conduit 53 connecting an outlet of discharge valve 16 to waste container 13; and two conduits 54, 55 connecting respective fittings 34, 44 to respective inlets of a Y fitting 56, the outlet of which is connected by a conduit 57 to waste container 13.

In actual use, the water drawn from reservoir 2 by pump 6 along conduit 47 is pumped under pressure by pump 6 to manifold 18 along conduit 48 and through fitting 20. Any air in pump 6, conduit 48 and manifold 18 is expelled through valve 35, which permits automatic self-priming of pump 6. When the pressure in manifold 18 rises, valve 35 closes to allow water flow to boiler 7 through fitting 39 and along conduit 49.

Valve 35 is preferably designed so that, when closed, it allows water to drip slowly to inlet 5 of reservoir 2 along conduits 54 and 57 and through fitting 56, and so continually flush conduit 48 and pump 6.

On reaching the inlet of hydraulic cylinder 10, the pressurized hot water from boiler 7 first closes infusion chamber 9, then infuses the ground coffee inside the infusion chamber to produce a coffee beverage, which flows out through a spout of infusion chamber 9.

Once the beverage is produced, pump 6 is stopped, so that the pressure in hydraulic cylinder 10 falls, the piston withdraws, and water flows out along conduit 52 to discharge valve 16. Stoppage of pump 6 opens discharge valve 16 - until then closed - to allow the water from hydraulic cylinder 10 to flow through discharge valve 16 and along conduit 53 into waste container 13.

If, for any reason, the pressure in boiler 7, and therefore in conduit 49 and fitting 39, exceeds a given maximum value, valve 46 opens to allow water to flow back to inlet 5 of reservoir 2 via fitting 44, conduit 55, fitting 56 and conduit 57, without ever flowing through manifold 18.

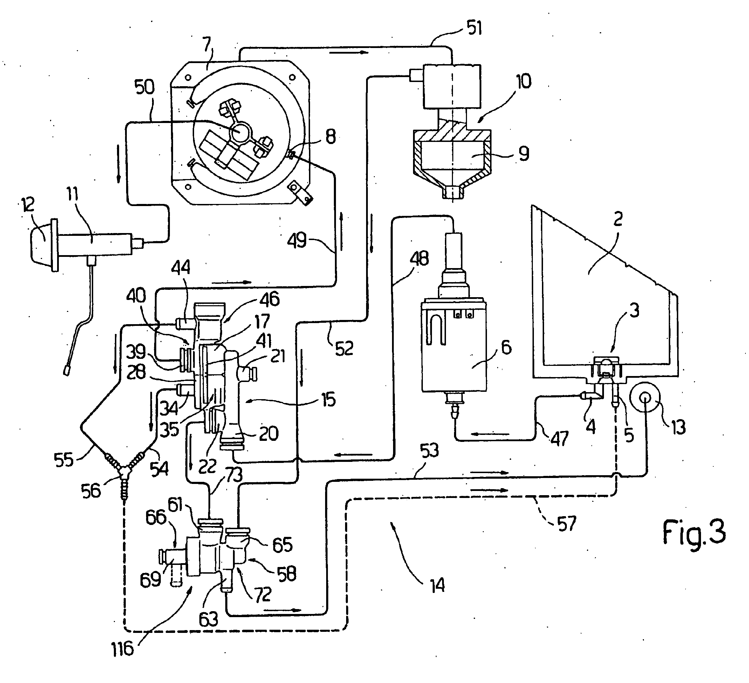

Infusion unit 1 in Figure 3 is very similar to the one in Figure 1, so, for the sake of simplicity, the component parts are indicated, where possible, using the same reference numbers as for the corresponding parts of infusion unit 1 in Figure 1.

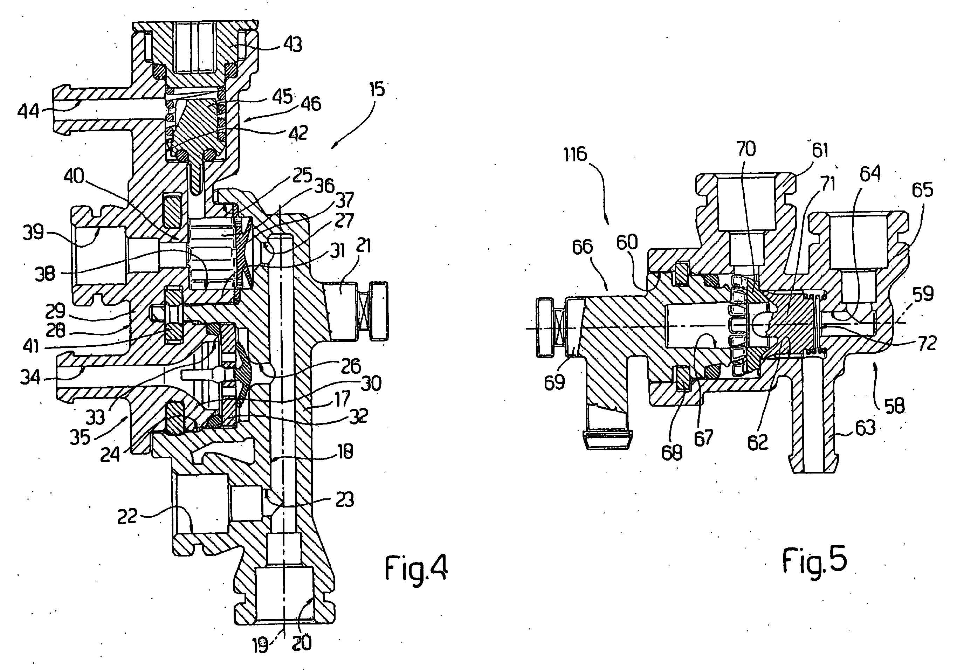

Infusion units 1 in Figures 1 and 3 substantially differ by discharge valve 16 in Figure 1 being replaced in Figure 3 with an automatic, hydraulically-activated discharge valve 116, and by valve assembly 15 (Figure 4) having no cap 22a.

As shown more clearly in Figure 5, discharge valve 116 comprises a hollow body 58 having an axis 59 and bounded at one end by a surface perpendicular to axis 59 and through which is formed a cylindrical cavity 60 coaxial with axis 59. Cavity 60 communicates radially with the outside along the inner conduit of a radial fitting 61, and has an end surface through which is formed a further cylindrical cavity 62 coaxial with axis 59 and of a smaller inside diameter than cavity 60. Cavity 62 communicates radially with the outside along the inner conduit of a radial fitting 63, and has an end surface through which is formed a closed conduit 64, which is coaxial with axis 59, is of a smaller inside diameter than cavity 62, and communicates radially with the outside along the inner conduit of a radial fitting 65.

Discharge valve 116 also comprises a hollow cap 66 coaxial with axis 59, engaging cavity 60 in fluidtight manner, defining a chamber 67 inside cavity 60, and locked axially with respect to hollow body 58 by a fastener 68. Cap 66 comprises, outside hollow body 58, a connector 69 for connection to a frame (not shown), and the end of cap 66 facing cavity 62 at fitting 61 has a ring of axial tabs, each of which fits between two adjacent axial tabs of an annular body 70 to hold annular body 70 in contact with the end surface of cavity 60 and define an annular area permanently connecting fitting 61 to chamber 67. Annular body 70 fits partly inside cavity 62, and defines a stop for a shutter 71 of a normally-open valve 72 for cutting off connection between fittings 65 and 63 when the pressure inside chamber 67 exceeds a given value.

In the Figure 3 hydraulic circuit 14, a conduit 73 connects fittings 22 and 61, conduit 52 connects the outlet of hydraulic cylinder 10 and fitting 65, and conduit 53 connects fitting 63 to waster container 13.

Infusion unit 1 in Figure 3 operates the same way as infusion unit 1 in Figure 1, the only difference being that part of the pressurized water fed to manifold 18 by pump 6 is fed, via fitting 22, conduit 73 and fitting 61, into chamber 67, and closes valve 72 to prevent discharge of hydraulic cylinder 10 throughout infusion. When pump 6 is stopped, the pressure in chamber 67 falls, thus opening valve 72 and discharging hydraulic cylinder 10 via conduit 52, fitting 65, conduit 64, cavity 62, fitting 63 and conduit 53.

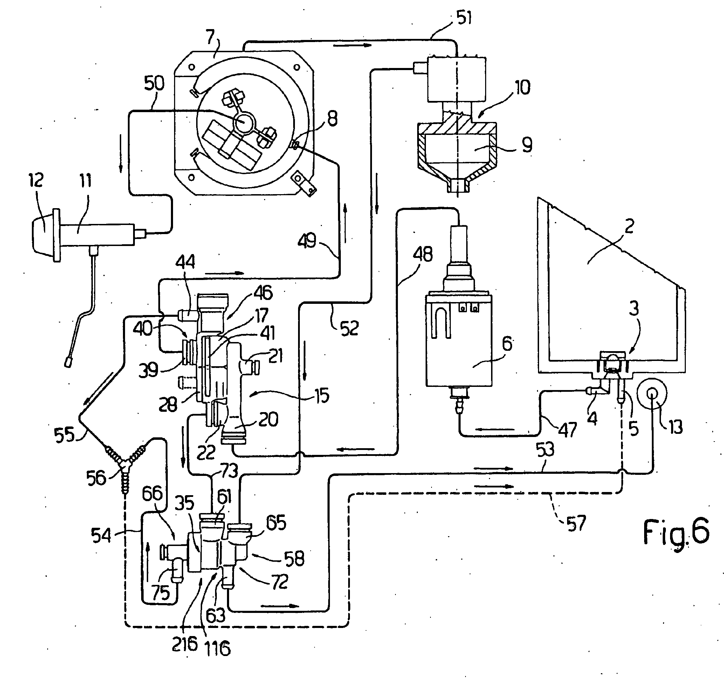

Infusion unit 1 in Figure 6 is very similar to the one in Figure 3, so, for the sake of simplicity, the component parts are indicated, where possible, using the same reference numbers as for the corresponding parts of infusion unit 1 in Figure 3.

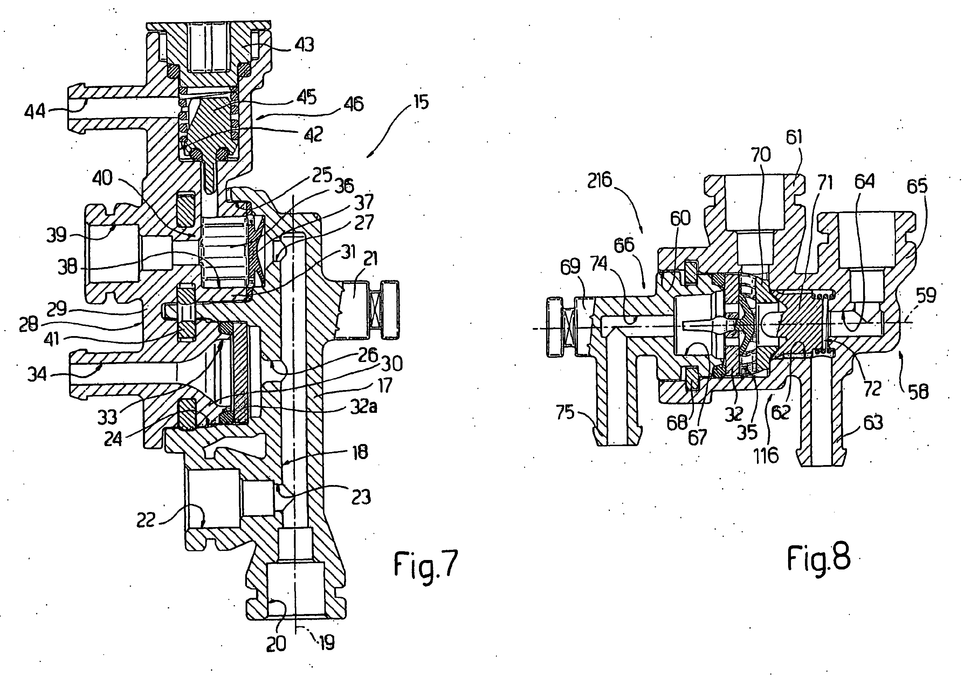

The Figure 3 and 6 infusion units 1 substantially differ by discharge valve 116 in Figure 3 forming part, in Figure 6, of a valve assembly 216, which, as shown in Figure 8, comprises discharge valve 116 and valve 35, which is eliminated from valve assembly 15 and formed in valve assembly 216.

Accordingly, perforated plate 32 of the Figure 4 valve assembly 15 is replaced, in the Figure 7 valve assembly 15, with a non-perforated plate 32a to permanently cut off connection between manifold 18 and fitting 34.

As shown in Figure 8, the Figure 5 cap 66 is modified by forming, inside connector 69, an axial conduit 74 communicating at one end with chamber 67, and at the other end with the outside via a radial fitting 75. As shown in Figure 8, the Figure 5 cap 66 is also modified by replacing its ring of axial tabs with perforated plate 32 fitted with a flexible control hood and which, together with chamber 67, defines one-way relief or self-prime valve 35.

Hydraulic circuits 14 in Figures 6 and 3 differ solely by conduit 54 in Figure 6 connecting fittings 75 and 56.

Infusion unit 1 in Figure 6 operates the same way as infusion unit 1 in Figure 3, the only difference being that, when water starts flowing along conduit 48 from pump 6, air inside conduit 48 and manifold 18 is expelled through fitting 22 to valve 35, and discharged by valve 35 to reservoir 2. When all the air is discharged, the pressurized water acts directly on, and closes, valve 35. In this case, too, valve 35 may be designed to allow a small amount of leakage throughout infusion.

## Claims

1. An infusion unit comprising a plurality of component elements in turn comprising a boiler (7) and a pump (6); and a hydraulic circuit (14) connecting the component elements and comprising a multi-function valve assembly (15) in turn comprising a manifold (18) having an inlet fitting (20) for water under pressure fed by the pump (6), an outlet fitting (39) connected to the boiler (7), a first one-way valve (40), and a second over-pressure valve (46); the infusion unit (1) being **characterized in that** the first valve (40) is located outside the manifold (18) and is interposed between the manifold (18) and the outlet fitting (39) to prevent water from flowing back from the outlet fitting (39) to the manifold (18); and the second valve (46) communicates with the outlet fitting (39) downstream from the first valve (40) in the water flow direction to the boiler (7).

2. An infusion unit as claimed in Claim 1, wherein the component elements further comprise an infusion chamber (9) for a particulate anhydrous material for infusion, hydraulic closing means (10) for closing the infusion chamber (9) in fluidtight manner, and a water reservoir (2); and a third valve (16; 116) connected to the hydraulic closing means (10) to allow water discharge from the hydraulic closing means (10).

3. An infusion unit as claimed in Claim 2, wherein the component elements further comprise a waste container (13); the third valve (16; 116) being interposed between the hydraulic closing means (10) and the waste container (13).

4. An infusion unit as claimed in Claim 2 or 3, wherein the third valve (116) is a hydraulically actuated automatic valve.

5. An infusion unit as claimed in Claim 4, wherein the third valve (116) comprises a first inlet (65) connected to the hydraulic closing means (10); a discharge outlet (63); a fourth valve (72) interposed between the first inlet (65) and the discharge outlet (63); an internal chamber (67) for controlling the fourth valve (72); and a second inlet (61) connected to the internal chamber (67) to receive water under pressure from the pump (6) and switch the fourth valve (72) from a normal open position to a closed position when the pressure inside the internal chamber (67) exceeds a predetermined value.

6. An infusion unit as claimed in Claim 5, wherein the multi-function valve assembly (15) comprises a further outlet fitting (22) connected to the second inlet (61) of the third valve (116).

7. An infusion unit as claimed in one of the foregoing Claims, wherein the multi-function valve assembly (15) further comprises a fifth valve (35), which is a self-prime valve of the pump (6); the fifth valve (35) having an inlet (26) communicating with the manifold (18) upstream from the first valve (40) in the water flow direction along the manifold (18) to the boiler (7).

8. An infusion unit as claimed in one of Claims 3 to 5, and comprising a further multi-function valve assembly (216) in turn comprising the third valve (116).

9. An infusion unit as claimed in Claim 8, wherein the further multi-function valve assembly (216) further comprises a fifth valve (35), which is a self-prime valve of the pump (6); the fifth valve (35) communicating with the manifold (18).

10. An infusion unit as claimed in Claim 5 or 6 and Claim 9, wherein the internal chamber (67) is an inlet chamber of the fifth valve (35).

## Patentansprüche

1. Aufgusseinheit, aufweisend eine Vielzahl von Bauelementen, die wiederum einen Boiler (7) und eine Pumpe (6) aufweisen; und einen Hydraulikkreis (14), der die Bauelemente verbindet und eine multifunktionale Ventilanordnung (15) aufweist, die wiederum einen Verteiler (18) aufweist mit einem Einlassanschluss (20) für unter Druck stehendes Wasser, das durch die Pumpe (6) zugeführt wird, einem Auslassanschluss (39), der mit dem Boiler (7) verbunden ist, einem ersten Einwegeventil (40) und einem zweiten Überdruckventil (46), wobei die Aufgusseinheit (1) **dadurch gekennzeichnet ist, dass** das erste Ventil (40) sich außerhalb des Verteilers (18) befindet und zwischen dem Verteiler (18) und dem Auslassanschluss (39) angeordnet ist, um zu verhindern, dass Wasser von dem Auslassanschluss (39) zurück zu dem Verteiler (18) fließt, und dass das zweite Ventil (46) in Verbindung mit dem Auslassanschluss (39) stromabwärts von dem ersten Ventil (40) in Flussrichtung des Wassers zu dem Boiler (7) steht.

2. Aufgusseinheit nach Anspruch 1, wobei die Bauelemente des Weiteren eine Aufgusskammer (9) für ein partikelförmiges wasserfreies Material für den Aufguss, ein hydraulisches Schließmittel (10) zum Schließen der Aufgusskammer (9) auf fluiddichte Weise und ein Wasserreservoir (2) und ein drittes Ventil (16; 116), das mit dem hydraulischen Schließmittel (10) verbunden ist, um eine Ausgabe von Wasser aus dem hydraulischen Schließmittel (10) zu ermöglichen, aufweisen.

3. Aufgusseinheit nach Anspruch 2, wobei die Bauelemente des Weiteren einen Abfallbehälter (13) aufweisen; und wobei das dritte Ventil (16; 116) zwischen dem hydraulischen Schließmittel (10) und dem Abfallbehälter (13) angeordnet ist.

4. Aufgusseinheit nach Anspruch 2 oder 3, wobei das dritte Ventil (116) ein hydraulisch betätigbares automatisches Ventil ist.

5. Aufgusseinheit nach Anspruch 4, wobei das dritte Ventil (116) aufweist einen ersten Einlass (65), der mit dem hydraulischen Schließmittel (10) verbunden ist, einen Ausgabeauslass (63); ein viertes Ventil (72), das zwischen dem ersten Einlass (65) und dem Ausgabeauslass (63) angeordnet ist; eine interne Kammer (67) zum Steuern des vierten Ventils (74); und einen zweiten Einlass (61), der mit der internen Kammer (67) verbunden ist, um unter Druck stehendes Wasser von der Pumpe (6) aufzunehmen und das vierte Ventil (72) von einer normalerweise geöffneten Position in eine geschlossene Position zu schalten, wenn der Druck innerhalb der internen Kammer (67) einen vorbestimmten Wert übersteigt.

6. Aufgusseinheit nach Anspruch 5, wobei die multifunktionale Ventilanordnung (15) einen weiteren Auslassanschluss (22) aufweist, der mit dem zweiten Einlass (61) des dritten Ventils (116) verbunden ist.

7. Aufgusseinheit nach einem der vorhergehenden Ansprüche, wobei die multifunktionale Ventilanordnung (15) des Weiteren ein fünftes Ventil (35) aufweist, das ein selbstansaugendes Ventil der Pumpe (6) ist, und wobei das fünfte Ventil (35) einen Einlass (26) besitzt, der in Verbindung mit dem Verteiler (18) stromaufwärts von dem ersten Ventil (40) in Flussrichtung des Wassers entlang des Verteilers (18) zu dem Boiler (7) steht.

8. Aufgusseinheit nach einem der Ansprüche 3 bis 5, des Weiteren aufweisend eine weitere multifunktionale Ventilanordnung (216), die wiederum das dritte Ventil (116) aufweist.

9. Aufgusseinheit nach Anspruch 8, wobei die weitere multifunktionale Ventilanordnung (216) des Weiteren ein fünftes Ventil (35) aufweist, das ein selbstansaugendes Ventil der Pumpe (6) ist, und wobei das fünfte Ventil (35) in Verbindung mit dem Verteiler (18) steht.

10. Aufgusseinheit nach Anspruch 5 oder 6 und 9, wobei die interne Kammer (67) eine Einlasskammer des fünften Ventils (35) ist.

## Revendications

1. Unité d'infusion comprenant une pluralité d'éléments constitutifs, comprenant à leur tour une chaudière (7) et une pompe (6) ; et un circuit hydraulique (14) reliant les éléments constitutifs et comprenant un ensemble de soupapes multifonction (15) comprenant à son tour un collecteur (18) ayant un raccord d'entrée (20) pour de l'eau sous pression alimentée par la pompe (6), un raccord de sortie (39) relié à la chaudière (7), une première soupape unidirectionnelle (40), et une deuxième soupape de surpression (46), l'unité d'infusion (1) étant **caractérisée en ce que** la première soupape (40) est située à l'extérieur du collecteur (18) et est interposée entre le collecteur (18) et le raccord de sortie (39) pour empêcher l'eau de refluer du raccord de sortie (39) au collecteur (18) ; et la deuxième soupape (46) communique avec le raccord de sortie (39) en aval de la première soupape (40) dans la direction d'écoulement de l'eau vers la chaudière (7).

2. Unité d'infusion telle que revendiquée dans la revendication 1, dans laquelle les éléments constitutifs comprennent en outre une chambre d'infusion (9) pour une matière particulaire anhydre pour une infusion, un moyen de fermeture hydraulique (10) pour fermer la chambre d'infusion (9) de manière étanche, et un réservoir d'eau (2) ; et une troisième soupape (16 ; 116) reliée au moyen de fermeture hydraulique (10) pour permettre à l'eau de se décharger du moyen de fermeture hydrauliques (10).

3. Unité d'infusion telle que revendiquée dans la revendication 2, dans laquelle les éléments constitutifs comprennent en outre un conteneur de déchets (13) ; la troisième soupape (16 ; 116) étant interposée entre le moyen de fermeture hydraulique (10) et le conteneur de déchets (13).

4. Unité d'infusion telle que revendiquée dans la revendication 2 ou 3, dans laquelle la troisième soupape (116) est une soupape automatique à actionnement hydraulique.

5. Unité d'infusion telle que revendiquée dans la revendication 4, dans laquelle la troisième soupape (116) comprend une première entrée (65) reliée au moyen de fermeture hydraulique (10) ; une sortie de décharge (63) ; une quatrième soupape (72) interposée entre la première entrée (65) et la sortie de décharge (63) ; une chambre interne (67) pour commander la quatrième soupape (72) ; et une deuxième entrée (61) reliée à la chambre interne (67) pour recevoir de l'eau sous pression de la pompe (6) et basculer la quatrième soupape (72) d'une position ouverte normale à une position fermée lorsque la pression à l'intérieur de la chambre interne (67) dépasse une valeur prédéterminée.

6. Unité d'infusion telle que revendiquée dans la revendication 5, dans laquelle l'ensemble de soupapes multifonction (15) comprend en outre un raccord de sortie (22) relié à la deuxième entrée (61) de la troisième soupape (116).

7. Unité d'infusion telle que revendiquée dans l'une des revendications susmentionnées, dans laquelle l'ensemble de soupapes multifonction (15) comprend en outre une cinquième soupape (35), qui est une soupape auto-amorçante de la pompe (6) ; la cinquième soupape (35) ayant une entrée (26) communiquant avec le collecteur (18) en amont de la première soupape (40) dans la direction d'écoulement de l'eau le long du collecteur (18) vers la chaudière (7).

8. Unité d'infusion telle que revendiquée dans l'une des revendications 3 à 5, et comprenant un ensemble de soupapes multifonction (216) comprenant à son tour la troisième soupape (116) .

9. Unité d'infusion telle que revendiquée dans la revendication 8, dans laquelle l'ensemble de soupapes multifonction (216) supplémentaire comprend en outre une cinquième soupape (35), qui est une soupape auto-amorçante de la pompe (6) ; la cinquième soupape (35) communiquant avec le collecteur (18).

10. Unité d'infusion telle que revendiquée dans la revendication 5 ou 6 et la revendication 9, dans laquelle la chambre interne (67) est une chambre d'entrée de la cinquième soupape (35).
